# EUROPEAN PATENT SPECIFICATION

(11) **EP 4 500 008 B1**
(45) Date of publication and mention of the grant of the patent: **24.06.2026**
(21) Application number: 23717206.9
(22) Date of filing: 29.03.2023
(51) Int. Cl.: F03D 13/10, F03D 13/25, F03D 13/40

(54) **A WIND TURBINE**
WINDTURBINE
ÉOLIENNE

(30) Priority: 29.03.2022 GB 202204464
(43) Date of publication of application: 05.02.2025
(73) Proprietor: Ultra Marine Energy Ltd, London W1W 6XH (GB)
(72) Inventor: COULTHARD, Michael William, Norwich Norfolk NR95LJ (GB); MACGREGOR, James Robert, Stonehaven Aberdeenshire AB39 2DJ (GB)
(74) Representative: Wilson Gunn
(86) International application number: PCT/GB2023/050812
(87) International publication number: WO 2023/187369

(56) References cited:
- WO-A1-02/052150
- WO-A1-2013/048257
- WO-A1-2014/187977
- WO-A2-2010/021655
- CN-A- 108 626 078
- GB-A- 2 538 329
- US-B1- 10 982 654

## Description

### Technical Field of the Invention

The present disclosure relates a wind turbine and method of deploying a wind turbine.

### Background to the Invention

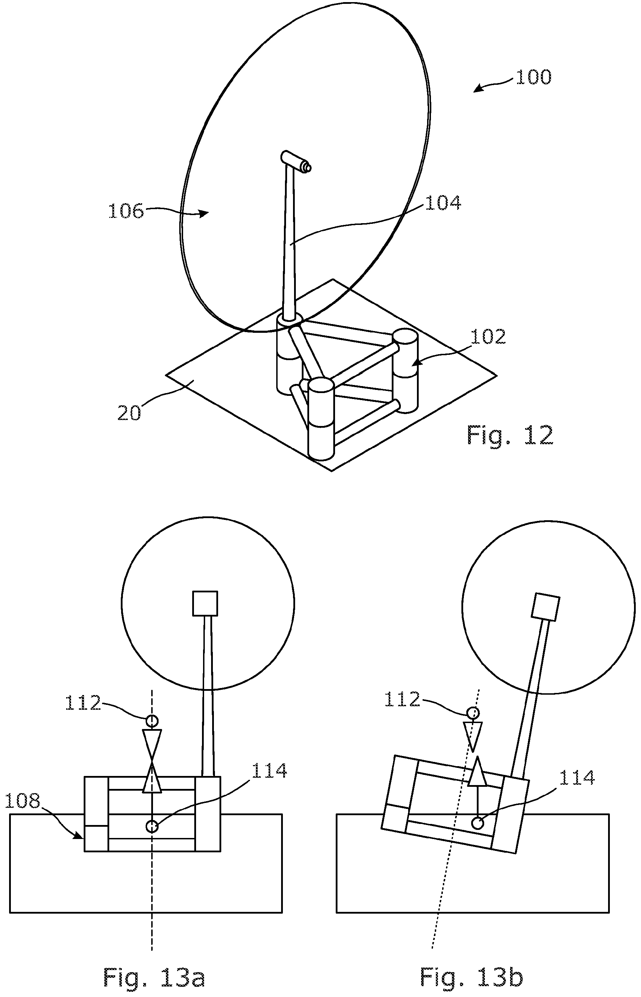

The use of offshore wind turbines has increased significantly over recent years and will continue to do so as the world moves to reduce carbon emissions. Figure 12 shows a conventional offshore wind turbine 100 which may be referred to as "a semi-submersible" turbine. The semi-submersible turbine 100 comprises a base 102 which provides a supporting structure on to which a turbine tower 104, which carries the turbine generator 106, is mounted. The base 102 comprises a number of buoyancy elements which provide sufficient buoyancy to keep the turbine afloat and stable in use in open water. Semi-submersible turbines may also include a fixed ballast 108, as can be seen best in Figures 13a and 13b to aid stability.

A drawback with semi-submersible turbines arises due to the size of the base which is required to provide the necessary buoyancy and stability. Figures 13a and 13b respectively show a side view of semi-submersible turbine in a neutral orientation and an exaggerated rolling orientation which may occur during normal operation. The respective centre of mass 112 and centre of buoyancy 114 are shown with the downward and upward facing arrows in each drawing. As can be seen, the centre of mass 112 and centre of buoyancy 114 are generally aligned in the neutral position such that the tower 104 is provided in a vertical orientation. However, in the rolling orientation the centre of mass 112 and centre of buoyancy 114 are laterally offset. Thus, as shown in Figure 13b, when the turbine pitches to one side, a portion of the base sinks lower in the water such that the centre of buoyancy 114 shifts towards the sunken end and thus acts to right the base back towards the neutral orientation, thereby providing stability.

In order for this stability mechanism to be effective, the base 102 is required to have a significant span and buoyancy which result in semi-submersible bases being generally oversized and heavy with respect to the turbine which is being supported. This adds significant cost in terms of materials and construction complexity for each turbine.

Another drawback of semi-submersible turbines is that the tower 104 and turbine 106 are subsequently mounted to the base 102 once the base has been fabricated in the vertical orientation . This requires the use of large quayside or floating cranes which is time consuming and costly.

Alternative spar based wind turbines are also known but they are assembled in a vertical orientation which requires deep water and large floating cranes for assembly. An example of prior art solutions is available in document WO 2010/021655 A2.

The present invention seeks to provide an improved offshore wind turbine.

### Summary of the Invention

The present invention provides an offshore wind turbine and a method of installing an offshore wind turbine according to the appended claims.

Disclosed herein is an offshore wind turbine. The wind turbine may comprise: a base configured to be submerged when the turbine is in an upright generating position in open water; and, a tower attached to the base and having a longitudinal axis.

The tower and base may movable between a horizontal towing position in which the turbine is towable through a body of water, and an upright generating position in which the turbine is vertically orientated for use in the body of water. The horizontal towing position allows the turbine to be towed through a shallow body of water after which it may be oriented vertically in a deeper body of water. Advantageously, the wind turbine is hydrostatically stable in both the horizontal towing position and in use when it is vertically oriented.

The wind turbine may be towable in an assembled condition such that the tower is mounted to the base in an in-use position. The tower may comprise a turbine generator at a free end thereof. The turbine generator may comprise an electrical generator and at least one blade. The turbine generator may be a horizontal axis turbine. Since the wind turbine is towable in an assembled condition, e.g., a condition in which the tower, generator and blades are mounted to the base prior to deployment, the logistical, constructional and costs issues associated with assembling wind turbines off-shore are avoided.

The base may be configurable to alter the buoyancy so as to provide the horizontal and vertical orientations. The base may further comprise: a primary buoyancy element; a ballast; and, a variable buoyancy element. The variable buoyancy element may be configured to have a buoyancy which is selectively variable to raise or lower the ballast in the body of water to move the turbine between the horizontal towing position and the vertical generating position. Hence, in a first configuration, the variable buoyancy element may comprise a towing buoyancy in which the ballast is raised towards the waterline, and a second configuration comprising a negative buoyancy in which the ballast is submerged beneath the tower. The variable buoyancy element may be repeatably reconfigurable between the first and second configurations to allow the turbine to be moved from the towing position to the upright generating position and vice versa. Advantageously, the base and the tower are configured to withstand the loads imposed by the temporary horizontal orientation (exposed only to sheltered wave conditions) as well as the conventional vertical operating orientation (exposed to survival storm conditions). This allows the turbine to remain in its vertical operating orientation in all storms.

The variable buoyancy element and ballast may be axially separated in relation to the longitudinal axis of the tower. The primary buoyancy element may be proximal to the tower. The variable buoyancy element and ballast may be distal to the tower and may be located below the primary buoyancy element when generator is in the upright generating position. The ballast may be distalmost to the tower. The ballast may be provided lowermost in the base when the generator is in the upright generating position. The ballast may be provided lowermost when the generator is in the horizontal towing position. The ballast may be located directly below the tower and may lie on the along the longitudinal axis of the tower.

The base may comprise a horizontal floatation axis. The horizontal floatation axis may be parallel or near parallel to the waterline when in the horizontal towing position. The floatation axis may be angularly offset from longitudinal axis of the tower such that the tower extends above the waterline when the turbine is in the horizontal towing position. The floatation axis may extend through the variable and primary buoyancy elements. The base may comprise a horizontal floatation plane. The floatation plane may pass through the primary buoyancy element and variable buoyancy element. The floatation plane may pass through one or more buoyant truss legs or struts.

The primary buoyancy element and variable buoyancy element may be configured to be partially above a water line when in the horizontal towing position.

The tower may comprise a buoyant portion. The tower may contribute towards the buoyancy of the primary buoyancy element. The primary buoyancy element may comprise a portion of the tower. The tower may be connected to the primary buoyancy element via one or more struts. The struts may comprise buoyant portions which may contribute to the buoyancy of the primary buoyancy element.

The primary buoyancy element and variable buoyancy element may be attached to one another by at least one truss leg. At least one truss leg may comprise variable buoyancy. The truss leg may be configured to be partially above the water line when the turbine is in the horizontal towing position.

There may be a plurality of truss legs connecting the primary buoyancy element and variable buoyancy element. The truss legs may be located on either side of the longitudinal axis of the tower. The primary and variable buoyancy elements may comprise a width which extends laterally with respect to the tower. The width of the primary and variable buoyancy elements may be parallel to one another.

The ballast and primary buoyancy element may be connected by at least one truss leg. At least one truss leg which extends between the primary buoyancy element and ballast may comprise negative buoyancy. Hence, at least one truss leg may be configured to be submerged when the turbine is in horizontal towing position. The truss leg may be free flooding.

The ballast may lie in a position to optimise the stability of the turbine in both horizontal and vertical orientations. In particular, the ballast may lie along or below the longitudinal axis of the tower. Hence, a central longitudinal axis of tower may extend through the ballast below the tower. The ballast may be located directly beneath the tower when the turbine is in the upright generating position.

The wind turbine may further comprise a turbine generator mounted to a free end of the tower. The turbine generator may comprise a generator and turbine blades sufficient to drive the generator in use. The turbine generator may be a horizontal axis turbine generator. The generator may be configured so that it is rotatable about the tower.

The turbine blades may be located on the front of the tower. This allows the blades to be kept out of the water as the turbine is being towed. The variable buoyancy is located fore of the ballast and may be on the front side of the tower. The centre of buoyancy of the variable buoyancy element, when in a buoyant configuration, may be forward of the ballast and forward of the central longitudinal axis of the tower.

The ballast and variable buoyancy elements may be attached to one another. The ballast and variable buoyancy elements may be located at a common axial location with respect to the tower.

The variable buoyancy element may comprise a buoyancy chamber. The buoyancy chamber may be directly connected to the ballast.

Either or both of the primary buoyancy element and variable buoyancy element comprise respective buoyancy chambers. The chambers may comprise one or more tanks. The chambers may be provided by respective tanks having chamber walls enclosing a space therein.

The primary buoyancy chamber and variable buoyancy tank may be located beneath the water line when in the upright generating position.

The or each buoyancy chamber may be cuboidal. Providing cuboidal chambers minimises the material and manufacturing cost. The or each chamber may be elongate having a length which traverses the tower and defines a width of the base. The variable buoyancy element and ballast may form a T-shape in which the variable buoyancy element extends from a mid-portion of the ballast. The truss legs and/or tower may be cylindrical or have a truncated cone profile.

The primary buoyancy element may comprise a fixed buoyancy. Thus, the primary buoyancy element may comprise a chamber having a sealed volume which is the same of the towing position and the upright position. The primary buoyancy element may comprise a portion of the tower and/or one or more struts which support the tower.

The variable buoyancy element may be configured to be selectively flooded with water to provide the selectively variable buoyancy. In particular, the variable buoyancy element may be configured to be selectively flooded with water from the external environment, e.g., sea water. The variable buoyancy element may be configured to be evacuated to provide buoyancy. Selectively flooding and evacuating the variable buoyancy element with water from the external environment varies the overall mass and thus the angle at which the turbine is titled. It also means that the buoyancy of the variable buoyancy elements can be adjusted easily and simply without having to distribute water (or another liquid) between multiple variable buoyancy elements using pumps, valves and sensors.

The turbine may comprise at least one truss leg connecting the primary buoyancy element and variable buoyancy element. The turbine may comprise at least two truss legs connecting the primary and variable buoyancy elements. The truss legs may extend parallel to one another. The primary and variable buoyancy elements and, optionally, the or each truss leg, may define a horizontal floatation plane when the turbine is in the horizontal towing position. The primary buoyancy element, variable buoyancy element and truss legs may be arranged to form a rectangle.

The turbine may comprise at least two rear truss legs connecting the primary buoyancy element and the ballast. The truss legs may extend parallel to one another. The turbine may comprise a third truss leg connecting the primary buoyancy element and the ballast.

The truss legs which connect either of the ballast and the variable buoyancy element or primary buoyancy element may extend front to back, or back to front, and/or laterally.

The primary buoyancy element may be sized to support the weight of the turbine in the water when in the vertical position. Hence, the primary buoyancy element may provide all or nearly all of the buoyancy for the turbine. The variable buoyancy element may have a buoyancy sufficient to overcome the negative buoyancy of the ballast so as to reduce the draft of the turbine for towing in a horizontal or near horizontal position.

The primary buoyancy element and/or chamber may be submerged when in the upright generating position. Submerging the primary buoyancy element and/or chamber may reduce the exposed wave area and lateral forces on the turbine.

The turbine may be referred to as a spar-like turbine.

The turbine may comprise a strong mast.

The present disclosure provides a method of deploying a wind turbine comprising: assembling the wind turbine in a horizontal or near horizontal position prior to deploying to an installation location, wherein the assembly comprises mounting a turbine tower to a submergible base. The method may further comprise floating the turbine in a horizontal towing position and towing the assembled wind turbine to the installation location. Advantageously, the turbine is able to remain stable in the horizontal towing position as it is being towed to the installation location. This may be achieved using the turbine's own integrated buoyancy and ballast and/or by mounting temporary buoyancy elements to the turbine during the tow.

Submerging the turbine generator is undesirable since this can result in the turbine generator becoming damaged. However, owing to the turbines' design and by optimising the buoyancy of the variable buoyancy elements, the turbine generator may be kept above the water line as the turbine is towed to its installation location.

The method may further comprise righting the assembled wind turbine in the installation location.

The turbine may comprise any turbine disclosed herein.

Righting the turbine may comprise submerging a ballast of the turbine. Righting the turbine may comprise flooding a variable buoyancy element.

In embodiments where temporary buoyancy elements are used to improve stabilisation of the turbine during the tow, the turbine may be righted by removing the temporary buoyancy elements.

The turbine may comprise a turbine generator. The turbine generator may comprise a generator and a plurality of turbine blades. The method may further comprise mounting the turbine generator to a free end of a tower of the turbine. Once assembled, the turbine may be tested. The testing may comprise mechanical and/or electrical testing. Advantageously, testing may be performed before deployment so that any issues can be resolved before the turbine is towed to the installation location.

The method may further comprise placing the assembled turbine on one or more movable carriers. The movable carriers may be railway buggies and may be operable to transport the turbine to a launch site. The turbine may be launched off the carriers in a floating horizontal towing position. Following launch, the turbine may be towed to an installation site. The towing may be achieved using one or more tug-boats.

The method may involve assembling the turbine in a dry dock in a horizontal orientation. The assembled turbine may then be floated out in the near horizontal orientation for towing to the installation location..

In some embodiments the turbine may be assembled at the quayside in a horizontal orientation. Once assembled, the turbine may be transferred to a barge for transporting to waters of sufficient depth to submerge the barge and leave the turbine in a near horizontal orientation. Advantageously, the turbine is able to use its own buoyancy and ballast for the tow.

Advantageously, the turbine may be fully assembled and commissioned prior to being floated out for towing to the installation location. This avoids issues associated with transporting turbine parts and assembling the turbine in the installation location in the water or at high elevation levels when vertical. The turbine may be tethered to the seabed in the upright generating position.

This may be achieved using mooring lines. In particular, a fixed spread mooring system may be used so that the tower and the base are prevented from rotating once in the installation location. However, it will be appreciated that the turbine generator will still be able to rotate about the tower as the wind direction changes. The spread mooring system may comprise the use of piles and/or anchors.

The method may involve reorientating the righted wind turbine to the horizontal or near horizontal towing position. In this way, the wind turbine can be towed back to a repair yard for example or to another location without the use of cranes or barges.

Reorientating the righted wind turbine from its vertical or near vertical installation position to the horizontal or near horizontal towing position may involve the step of de-flooding the base of the wind turbine. This may be achieved by pumping water out of the base or by pumping air into the base to dispel any water contained therein.

The skilled person will appreciate that except where mutually exclusive, a feature described in relation to any one of the aspects, embodiments or examples described herein may be applied mutatis mutandis to any other aspect, embodiment or example. Furthermore, except where mutually exclusive, any feature described herein may be applied to any aspect and/or combined with any other feature described herein.

### Brief Description of the Drawings

In order that the invention may be more clearly understood one or more embodiments thereof will now be described, by way of example only, with reference to the accompanying drawings, of which:
Figure 1 shows an offshore wind turbine according to an embodiment of the present disclosure;
Figure 2 shows a side view of the wind turbine of Figure 1;
Figure 3 shows an offshore wind turbine in a horizontal towing position;
Figure 4 shows a view of the turbine of Figure 3 above the waterline;
Figure 5 shows an alternative embodiment of a wind turbine according to the present disclosure;
Figure 6 shows a further alternative embodiment of a wind turbine according to the present disclosure;
Figures 7 and 8 show a side view of a wind turbine according to the present disclosure in a vertical and rolling orientations respectively;
Figures 9 to 11 show the deployment of a fully assembled wind turbine on a rail bogey system according to the present disclosure from a land-based assembly location; and,
Figures 12, 13a and 13b show a prior art semi-submersible wind turbine which does not form part of the present invention.

### Detailed Description of the Invention

In the following detailed description, numerous specific details are set forth in order to provide a thorough understanding of various embodiments and the inventive concept. However, those skilled in the art will understand that: the present invention may be practiced without these specific details or with known equivalents of these specific details; that the present invention is not limited to the described embodiments; and, that the present invention may be practiced in a variety of alternative embodiments. It will also be appreciated that well known methods, procedures, components, and systems may have not been described in detail.

In the following description, the term axial may be taken to be in relation to the longitudinal axis of the tower unless stated differently. The front of the turbine may be taken to the side on which the turbine blades rotate when generating. The terms horizontal and vertical may be understood to be horizontal or near-horizontal and vertical or near-vertical respectively. The vertical and horizontal orientations may refer to a neutral orientation in the absence of rolling due to sea conditions and the vertical or near vertical orientation may be referred to herein as an upright generating position.

The same reference numerals may be used for corresponding features throughout the drawings. In such cases, the description of these features may not be repeated.

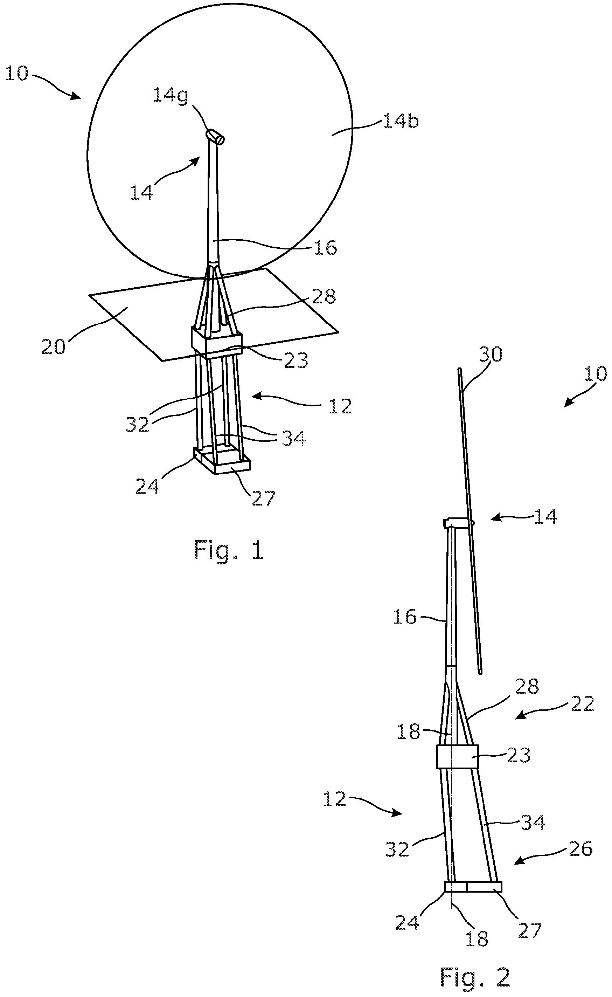

With reference to Figures 1 and 2, there is shown an offshore wind turbine 10 in a vertical generating position. The wind turbine 10 comprises a base 12 and a turbine generator 14 mounted on a tower 16. The turbine generator 14 is rotatable about the tower 16 so that it can be rotated to face the wind to optimise power generation. The tower 16 has a longitudinal axis 18 and extends upwardly from a first end which is attached to the base 12 to a second end to which the turbine generator 14, which comprises a generator 14g and turbine blades 14b, is mounted.

The tower 16 extends generally in a vertical or near-vertical orientation in use such that the turbine generator 14 can be driven by the wind. The turbine 10 is shown as being located in a body of water 20, which may be any suitable body of water and will typically be an offshore location.

The base 12 comprises a primary buoyancy element 22, a ballast 24 and a variable buoyancy element 26. The primary buoyancy element 22 may comprise a primary buoyancy chamber 23 having a hollow interior defined by a chamber wall. The primary buoyancy chamber 23 may be referred to as a tank.

The primary buoyancy element 22 is sealed in use to provide the main buoyancy for the turbine 10. The buoyancy provided by the primary buoyancy element 22 is sufficient to support the weight of the turbine 10 in the water whilst in the vertical orientation. The primary buoyancy chamber 23 is shown in the form of a hollow cuboidal structure which is convenient to minimise the constructional costs and material requirements, but this is not a limitation and other forms of primary buoyancy chambers and elements may be possible.

The tower 16 may be mounted directly to the primary buoyancy chamber 23 with one or more struts 28 which extend between the tower 16 and an upper surface of the chamber 23 to provide suitable support. In some embodiments, the tower 16 and struts 28 may also comprise buoyant elements and could be considered to form part of the primary buoyancy element 22. As such, the primary buoyancy element 22 may comprise chamber 23, tower 16 and/or struts 28 which may be hollow and sealed. The tower 16, struts 28 and primary buoyancy chamber 23 may or may not be in fluid communication with one another.

The location at which the tower 16 is attached to the primary buoyancy chamber 23 may vary between embodiments. In the example of Figures 1, 2, 5 and 6, the tower 16 is mounted towards a rear edge of an upper chamber wall of the chamber 23. This mounting position provides room to the rear of the tower 16 to accommodate one or more supporting struts 28, whilst keeping the longitudinal axis 18 and associated location of the ballast (which lies on the axis 18) 24 as rearwards as possible. However, it will be appreciated that the tower 16 may be located more centrally on the chamber 23 in some embodiments as determined by the optimum position to suit both horizontal and vertical orientations.

The ballast 24 may be axially displaced from the primary buoyancy element chamber 23 with respect to the longitudinal axis 18 so as to be suspended beneath the primary buoyancy element 22 when in the vertical orientation. In the embodiment shown in Figure 2, the ballast 24 is located directly below the turbine tower 16 so as to lie on the longitudinal axis 18 which helps keep the tower 16 in a vertical orientation, in use. However, this is not a limitation and the ballast 24 may be offset from the longitudinal axis 18 in some embodiments.

The ballast 24 (which may be referred to a fixed ballast) is sized and located to ensure stability in the upright generating position by keeping the centre of mass at a suitable distance below the centre of buoyancy. The ballast 24 is also sized and located to ensure stability and minimise the draft of the assembly in the horizontal position. Providing a smaller draft in the horizontal position allows the turbine to be launched in shallower water allowing for more widely readily dispersed manufacturing and deployment of the turbines.

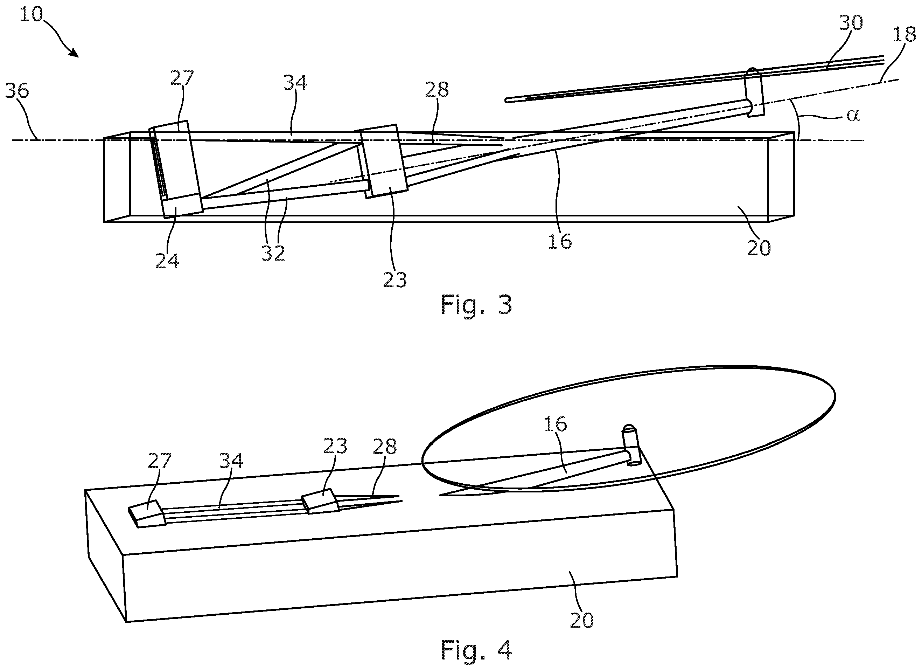

The ballast 24 may be any suitable size or shape and may be constructed from any suitable material to provide the required mass. In some embodiments, the ballast 24 may comprise a cuboidal block of iron or concrete, for example. In the embodiment shown in Figure 1, the ballast 24 comprises an elongate cuboidal block having its major axis transverse to the longitudinal axis 18 and parallel to the plane of the rotating turbine blades 14b during the tow. As such, the ballast 24 may be configured to sit in a horizontal orientation under the waterline when the turbine 10 is in the towing position, as shown in Figures 3 and 4 which are described below.

The ballast 24 may be the lowermost element of the turbine 10 when in the horizontal and vertical positions. Hence the draft of the turbine 10 may be defined by the depth of the ballast 24.

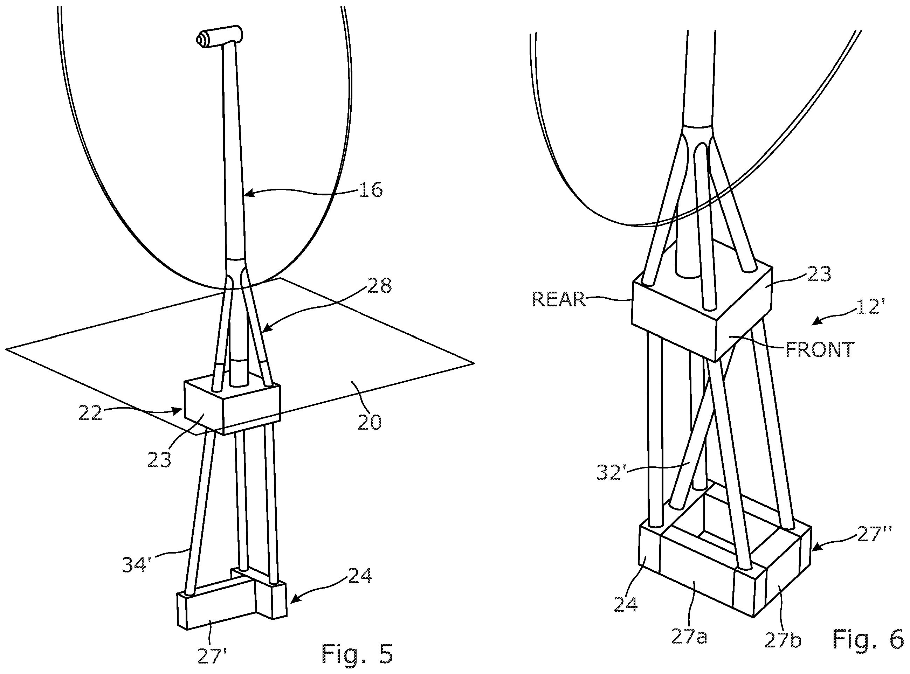

The ballast 24 may be attached to the primary buoyancy chamber 23 by one or more truss legs 32. In the embodiment shown, there are two truss legs which extend parallel to one another between corresponding corners of the primary buoyancy chamber 23 and ballast 24. However, it will be appreciated that the number, relative alignment and position of these connecting truss legs 32 may vary in other embodiments. As an example of this, Figure 6 shows a ballast 24 supported by three connecting truss legs in which an optional middle third truss 32' extends from a forward position on the primary buoyancy chamber 23 rearwards to the centre of the ballast 24.

The truss legs 32, 32' which connect the ballast 24 and primary buoyancy element 22 will generally be configured to have zero or negative buoyancy such that they do not contribute to the buoyancy of the turbine 10 when in the horizontal or vertical orientations. In preferred embodiments, the connecting truss legs 32, 32' will be hollow and free flooding to provide a desirable strength to weight ratio. Free flooding of the truss legs may be provided by apertures in the tubular walls of the truss legs, for example.

The variable buoyancy element 26 has variable buoyancy such that the orientation of the turbine 10 may be moved between a horizontal towing orientation (as shown in Figures 3 and 4), and the vertical generating orientation shown in Figures 1, 2, 5 and 6. As such, in a first configuration, the variable buoyancy element 26 is provided with sufficient buoyancy to displace the mass of the ballast 24 and cause the submerged end of the turbine 10 to float for towing such that part of the variable buoyancy element 26 and the primary buoyancy chamber 23 have water plane areas. In a second configuration, the buoyancy of the variable buoyancy element 26 is reduced, by being flooded for example, such that it adds to the weight of the fixed ballast 24, thereby moving the turbine 10 into the upright generating position with the water plane above the primary buoyancy chamber 23.

The shape and size of the variable buoyancy element 26 may vary between embodiments. In Figure 1, the variable buoyancy element 26 comprises a variable buoyancy chamber 27 which may be directly attached to the ballast 24 and may be cuboidal.

The variable buoyancy element 26 may be any suitable size or shape which provides the necessary buoyancy for lifting the ballast 24 and aiding stabilisation of the turbine 10 when horizontal. In Figure 1, the variable ballast comprises a chamber 27 which is directly attached to a front edge of the ballast 24 and has a width and depth which is generally similar to the ballast 24. Figure 5 shows a variable buoyancy chamber 27' having an elongate form which is centrally and perpendicularly aligned to the ballast 24. Providing an elongate buoyancy chamber 27' such as this allows the ballast 24 to be positioned lower in the water in the horizontal position, thereby increasing the stability when being towed. Figure 6 shows a yet further embodiment in which the variable buoyancy element 27" comprises an n-shaped chamber 27" having arms 27a with end portions attached to the ballast 24 and a bridging piece 27b extending between the arms 27a and positioned distal to the ballast 24. With this construction, the central portion of the chamber 27" may not contribute to the buoyancy meaning the horizontal draft may be increased when compared to the arrangement of Figure 1, thereby providing further stability. When compared to Figure 5, the increased width of chamber 27" provides more stable buoyancy.

As shown, in each of these embodiments, the variable buoyancy chamber 27, 27' and 27", may be attached directly to the fixed ballast 24, with both lying in a common plane. However, this is not a limitation and the ballast 24 and variable buoyancy chamber 27, 27', 27" may be attached to each other in other ways and may be provided at different axial locations.

As noted above, in order to provide the variable buoyancy, the variable buoyancy element 26 may comprise one or more hollow chambers which are configured to be flooded (or evacuated) when the buoyancy is to be changed. Thus, although not shown, the variable buoyancy element 26 may comprise one or more valves or couplings which allow the ingress or egress of water.

In a similar way to the ballast 24, the variable buoyancy element 26 shown in Figure 1 is connected to the primary buoyancy element 22 via a pair of truss legs 34 which extend parallel to one another between corresponding corners of the primary buoyancy chamber 23 and variable buoyancy chamber 27. However, this is not a limitation and number, relative alignment and position of the connecting truss legs 34 may vary in other embodiments. An example of an alternative embodiment is shown in Figure 5 where only a single truss leg 34' is provided between the primary and variable buoyancy elements.

The truss legs 34 which connect the variable 26 and primary 22 buoyancy elements may form part of the variable buoyancy of the wind turbine 10. Hence, the truss legs 34 may comprise hollow tubular members which are configured to be buoyant when the wind turbine 10 is in the horizontal towing position and selectively floodable so as to submerge when the turbine is moved into the upright generating position. As such, the variable buoyancy element 26, may comprise the variable buoyancy chamber 27 and the variable buoyancy truss legs 34.

The variable buoyancy element 26 may be located on the surface side of the ballast 24 such that it is above the ballast 24 in the water when in the horizontal position. Providing the variable buoyancy element 26 above the ballast 24 in the horizontal orientation increases the stability of the turbine 10 when being towed. As can be seen in Figure 2, the variable buoyancy element 26 may be located in front of the ballast 24 and longitudinal axis 18 of the tower 16 on the turbine generator blade 14b side, optionally directly below the turbine blades 14b, for example.

Figures 3 and 4 show the wind turbine 10 in the horizontal orientation in a body of water 20 such that it can be towed to an installation site prior to being righted into an operative position. The relative buoyancy and positions of the variable buoyancy element 26 and primary buoyancy element 22 provide the wind turbine 10 with a floatation axis 36 which extends through the primary 23 and variable 27 buoyancy chambers and at an angle α to the longitudinal axis 18 of the tower 16 such that the turbine generator 14 is held above the water line for towing. The angle α may be between 1 and 30 degrees to suit water depth. Suitably, the angle α may be between 1 and 15 degrees. In some embodiments the angle α may be between 7 and 15 degrees. For example, the angle α may be 10 degrees. The extent to which the turbine generator 14 is held aloft may vary between embodiments and in line with the size of the tower 16 and turbine generator 14 etc. However, it is typically preferred to keep the turbine generator 14 out of the water and splash zone in normal towing conditions.

A suitable waterline of the turbine 10 can be best seen in Figure 4. Here portions of the front truss legs 34, primary 23 and variable 27 buoyancy chambers and struts 28 are exposed above the waterline. Exposing these elements out of the water 20 in this way provides the turbine 10 with stability for towing. For example, should the turbine 10 tilt along or rotate about the floatation axis 36, the centre of buoyancy would move towards the more submerged parts, thereby returning the turbine back to the neutral towing position.

More specifically, in the horizontal mode the primary buoyancy chamber 23, front truss legs 34 and the variable buoyancy chamber 27 are all partially submerged with a pitch axis about the centre of gravity which is located around the primary buoyancy chamber 23. A roll axis is located close to the axial centreline 18 of the tower 16.

Should pitching moments force the generator 14g and blades 14b towards the water 20 the complete assembly would rotate about a pitch axis near the primary buoyancy chamber 23, raising the variable buoyancy chamber 27 and truss legs 34 out of the water (reducing their vertical buoyancy force contribution) and submerging the lower part of the tower 16 (increasing their vertical buoyancy force contribution) with the net effect that the overall centre of buoyancy would temporarily move towards the tower 16 and turbine generator 14, and so create a restoring moment keeping the generator 14g and blades 14b out of the water.

Should the turbine assembly roll to one side or the other, the downwards moving truss leg 34 and the connected variable 27 and primary 23 buoyancy chambers would become submerged increasing their vertical buoyancy force contribution. On the lifted side, the buoyancy elements would reduce their immersion, thereby decreasing their vertical force contribution, with the net effect of moving the overall centre of buoyancy and creating a restoring moment towards the vertical, whereby the assembly would self-right.

It will be appreciated that the position of the water line will vary according to multiple factors including the specific design of the various elements of the turbine as well as the salinity and temperature of the water, as is well understood in the art. It will also be appreciated that, generally, the lower the ballast 24 sits in the water the greater the stability of the turbine 10 whilst being towed. Therefore, the size, shape and position of the variable buoyancy element 26 relative to the ballast 24 and primary buoyancy element 22 may be different to those shown in the Figures to reduce or increase the stability of the turbine and/or to reduce or increase the draft of the wind turbine whilst being towed.

During the transition from horizontal to upright positions, the locations of the centre of buoyancy and centre of mass shift to allow for the different modes of operation. In the horizontal orientation the centre of buoyancy and the centre of mass are located at the same axial distance from the ballast. As the orientation is changed from horizontal to vertical, the centre of buoyancy moves down towards the base of the platform as the lower part of the tower emerges from the water. The centre of mass moves closer towards the fixed ballast 24 as ballast (i.e. water) is added to the variable buoyancy structures near the ballast 24. This provides the centre of mass below the centre of buoyancy when the complete assembly is in the vertical orientation.

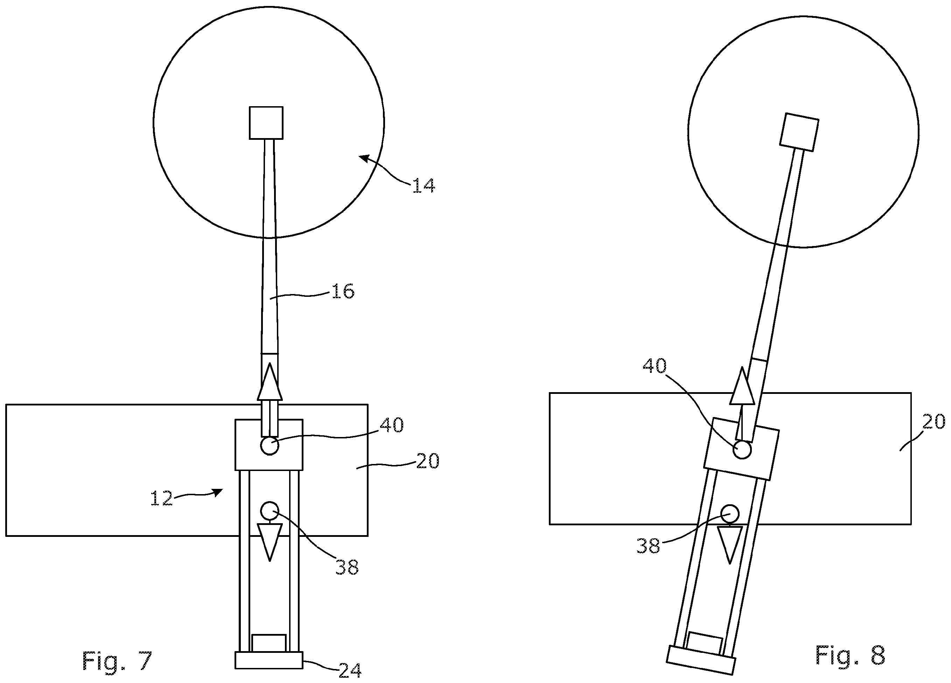

Having the centre of mass lower than the centre of buoyancy provides hydrostatic stability in the vertical mode when the contribution of waterplane area second moment of area is minimal. This contrasts with the horizontal mode where the centre of mass is above the centre of buoyancy, but hydrostatic stability is achieved because the second moment of waterplane area is far greater than in the vertical mode. Figures 7 and 8 show, respectively, the turbine in an upright orientation and a rolling orientation in which the turbine tower 16, and turbine generally, is moved away from vertical. In the upright orientation, the centre of mass 38 is aligned with the centre of buoyancy 40. When the turbine 10 rolls away from vertical, the centre of buoyancy 40 moves in the direction of tilt and the centre of mass 38 moves away thereby creating a correcting moment to move the turbine 10 back into the upright position.

The wind turbine 10 of the present disclosure may be referred to as a spar turbine in that the turbine 10 is generally elongate with the submerged elements having a high aspect ratio and a low centre of mass when in the upright position. An advantage of a spar turbine is that it is generally very stable and does not require the large amounts of steel required by a semi-submersible turbine.

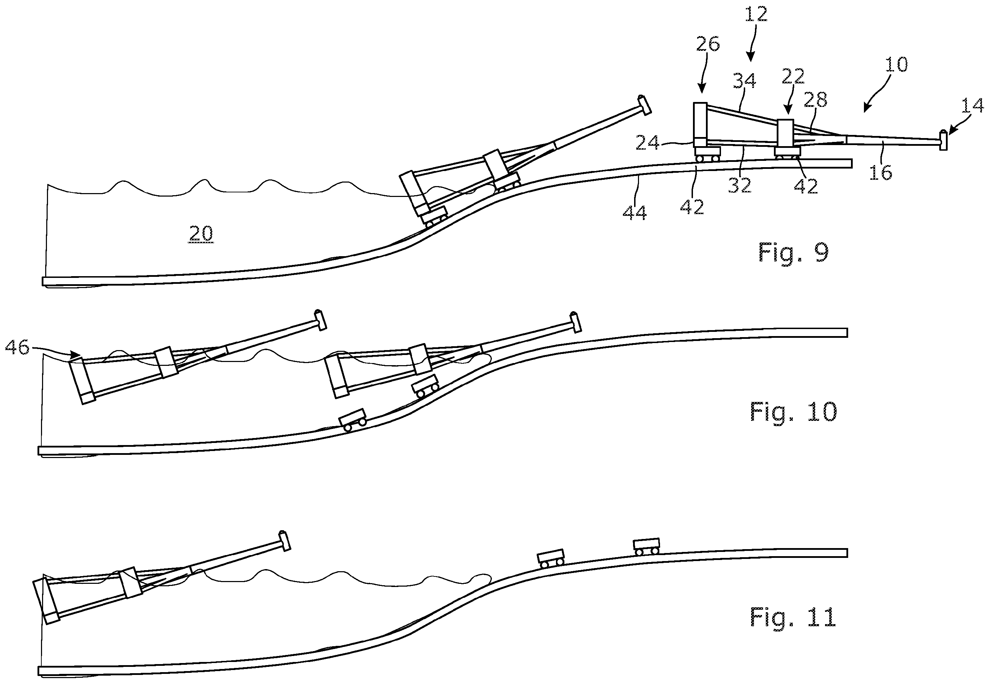

Figures 9 to 11 shows a method of deploying a wind turbine 10 according to an embodiment of the present disclosure. The wind turbine 10 may be any turbine disclosed herein with the common reference numerals denoting common features. The wind turbine 10 may be fully assembled and tested prior to being floated in the water 20. Hence, as shown in Figure 9, there is an assembled wind turbine 10 comprising a floating base 12 complete with a turbine tower 16 and turbine generator 14. Although not shown, the turbine generator 14 may also incorporate the turbine blades 14b and may have been mechanically and electrically tested. Carrying out mechanical and electrical testing on dry land prior to deployment is generally more readily achieved and therefore more time and cost efficient.

Following assembly, the wind turbine 10 may be entered into the water 20 using a suitable launch system. In the embodiment shown, the turbine 10 is carried by rail buggies 42 which move along a railway line 44 to enter the water 20 and float the turbine structure 10. However, this is not a limitation and other means of launching the turbine 10 are possible. For example, the wind turbine 10 may be assembled in a dry dock and floated out in a horizontal or near horizontal position.

Once the wind turbine 10 is floated it may be towed out to an installation location using a conventional tow 46, such as a tug boat.

As described above, once at the installation site, the variable buoyancy element 26 may be flooded and submerged to upright the turbine 10. In this vertical orientation the stability of the turbine against external overturning forces or capsize is ensured by the centre of mass being below the centre of buoyancy.

Once upright, the turbine 10 may be tethered to the seabed using suitable mooring lines and the necessary electrical connections made to export the generated electrical energy. It will be appreciated that, although the turbine 10 of the present disclosure allows much of the mechanical and electrical testing of the generator to be done onshore, further post installation testing may be required prior to use.

The present disclosure provides a spar-like wind turbine which can be completely assembled in the horizontal or near horizontal orientation to comprise the tower, turbine generator and blades, prior to being floated in a horizontal orientation and towed to its installation location using under its own buoyancy. The complete turbine assembly is stable in its horizontal tow orientation due to its form and in-built buoyancy. The reduced draft of the near horizontal towing position permits the turbine assembly to be moved to locations with shallower waters which are local to installation sites. The mass of the complete wind turbine assembly may increase by 30-50% in the transition from horizontal to vertical as water ballast is added to the base. In some embodiments the mass may increase by 35-45%. For example, the mass increase may be around 40%. The use of a spar turbine and variable buoyancy allows the size and weight, and hence cost, of the turbine to be significantly reduced when compared to conventional turbines, particularly semi-submersibles.

The one or more embodiments are described above by way of example only and it will be appreciated that the design of the turbine 10 may be varied to suit the horizontal mode requirements and the vertical mode requirements by adjusting the length of the truss legs, the weight of the fixed ballast, the relative locations, shapes and sizes of the fixed and variable buoyancy elements. These variations are possible without departing from the scope of protection afforded by the appended claims.

## Claims

1. An offshore spar wind turbine (10), comprising:
a base (12) configured to be submerged when the turbine is in an upright generating position in open water; the base comprising
a primary buoyancy element (22), wherein the primary buoyancy element comprises a chamber (23) having fixed buoyancy;
a ballast (24);
a variable buoyancy element (26) configured to be selectively flooded with water to add to the weight of the ballast and selectively evacuated to provide buoyancy;
at least one truss leg (32) that extends between and is attached to the primary buoyancy element and the variable buoyancy element, wherein the at least one truss leg comprises variable buoyancy;
a tower (16) mounted to an upper surface of the chamber, the tower having a longitudinal axis; and
a turbine generator (14) mounted to a free end of the tower, the turbine generator comprising a generator (14g) and turbine blades (14b),
wherein the tower and base are movable between a horizontal towing position in which the turbine is towable through a body of water, and an upright generating position in which the turbine is vertically orientated for use in the body of water and wherein the variable buoyancy element is configured to have a buoyancy which is selectively variable to raise or lower the ballast in the body of water to move the turbine between the horizontal towing position in which the turbine generator is held above the water's surface and the vertical generating position in which the chamber is submerged below the water's surface.

2. The turbine of claim 1, wherein the variable buoyancy element and ballast are axially separated from the primary buoyancy element in relation to the longitudinal axis, and wherein the primary buoyancy element is proximal to the tower and the ballast is distal to the tower.

3. The turbine of either of claims 1 or 2, wherein the base comprises a horizontal floatation axis which is parallel to the waterline when in the horizontal towing position,
wherein the floatation axis is angularly offset from the longitudinal axis of the tower such that the tower extends above the waterline when the turbine is in the horizontal towing position.

4. The turbine of any of claims 1 to 3, wherein the primary buoyancy element and variable buoyancy element are configured to be partially above a water line when in the horizontal towing position, and optionally wherein one or more of the truss legs are configured to be partially above the water line when the turbine is in horizontal towing position.

5. The turbine of any of claims 1 to 4, wherein the ballast and primary buoyancy element are connected by at least one truss leg, wherein, optionally, the at least one truss leg is a free flooding truss leg.

6. The turbine of claim 5, wherein the at least one truss leg is configured to be submerged when the turbine is in horizontal towing position.

7. The wind turbine of any of claims 1 to 6, wherein the ballast lies along or below the longitudinal axis of the tower.

8. The wind turbine of any of claims 1 to 7, wherein the turbine blades are located on the front of the tower in the horizontal towing position, and the variable buoyancy is located fore of the ballast.

9. The turbine of any of claims 1 to 8, wherein the ballast and variable buoyancy element are attached to one another.

10. The turbine of any of claims 1 to 9, wherein either or both of the primary buoyancy element and variable buoyancy element comprise respective tanks, wherein, optionally, both the primary buoyancy tank and variable buoyancy tank are located beneath the water line when in the upright generating position.

11. A method of deploying a spar wind turbine according to any of claims 1 to 9 comprising:
assembling the wind turbine in a horizontal or near horizontal orientation prior to deploying to an installation location, wherein the assembly comprises mounting a turbine tower to a submergible base;
towing the assembled wind turbine in a horizontal or near horizontal position to the installation location; and
up righting the assembled wind turbine in the installation location.

12. The method of claim 11, wherein assembling the wind turbine in a horizontal or near horizontal orientation comprises the steps of mounting the turbine tower to the submergible base and mounting a turbine generator comprising a plurality of turbine blades to a free end of the turbine tower.

13. The method of claim 11 or claim 12, wherein the assembled wind turbine is towed in a horizontal or near horizontal position to the installation location under its own buoyancy, and optionally wherein the assembled wind turbine is mounted with a temporary buoyancy element and then towed in a horizontal or near horizontal position to the installation location.

14. The method of any of claims 11 to 13, wherein righting the assembled turbine comprises flooding the base of the wind turbine to cause it to submerge.

15. The method of any of claims 11 to 14, wherein the righted wind turbine is reoriented to the horizontal or near horizontal towing position, and optionally wherein reorientation from a righted position to the horizontal or near horizontal towing position comprises the step of de-flooding the base of the wind turbine.

## Patentansprüche

1. Offshore-Spar-Windturbine (10), umfassend:
einen Sockel (12), der so ausgelegt ist, dass er untergetaucht ist, wenn sich die Turbine in einer aufrechten Stromerzeugungs-Position im offenen Wasser befindet; wobei der Sockel umfasst
ein primäres Auftriebselement (22), wobei das primäre Auftriebselement eine Kammer (23) mit konstantem Auftrieb umfasst;
einen Ballast (24);
ein variables Auftriebselement (26), das so ausgebildet ist, dass es wahlweise mit Wasser geflutet werden kann, um das Gewicht des Ballasts zu erhöhen, und wahlweise entleert werden kann, um Auftrieb zu erzeugen;
mindestens ein Trägerbein (32), das sich zwischen dem primären Auftriebselement und dem variablen Auftriebselement erstreckt und an diesen befestigt ist, wobei das mindestens eine Trägerbein einen variablen Auftrieb aufweist;
einen Turm (16), der an einer Oberseite der Kammer angebracht ist, wobei der Turm eine Längsachse aufweist; und
einen Turbinengenerator (14), der an einem freien Ende des Turms angebracht ist, wobei der Turbinengenerator einen Generator (14g) und Turbinenschaufeln (14b) umfasst,
wobei der Turm und der Sockel zwischen einer horizontalen Schlepp-Position, in der die Turbine durch ein Gewässer geschleppt werden kann, und einer aufrechten Stromerzeugungs-Position, in der die Turbine vertikal ausgerichtet ist, um in dem Gewässer eingesetzt zu werden, verlagert werden kann und wobei das variable Auftriebselement so ausgebildet ist, dass es einen Auftrieb aufweist, der wahlweise variierbar ist, um den Ballast in dem Gewässer anzuheben oder abzusenken, um die Turbine zwischen der horizontalen Schlepp-Position, in der der Turbinengenerator über der Wasseroberfläche gehalten wird, und der vertikalen Stromerzeugungs-Position, in der die Kammer unter die Wasseroberfläche getaucht ist, zu bewegen.

2. Turbine nach Anspruch 1, wobei das variable Auftriebselement und der Ballast in Bezug auf die Längsachse axial vom primären Auftriebselement getrennt sind, und wobei das primäre Auftriebselement proximal zum Turm und der Ballast distal zum Turm angeordnet sind.

3. Turbine nach einem der Ansprüche 1 oder 2, wobei der Sockel eine horizontale Auftriebs-Achse aufweist, die in der Schlepp-Position parallel zur Wasserlinie verläuft,
wobei die Auftriebs-Achse gegenüber der Längsachse des Turms so winkelversetzt ist, dass sich der Turm über die Wasserlinie erstreckt, wenn sich die Turbine in der Schlepp-Position befindet.

4. Turbine nach einem der Ansprüche 1 bis 3, wobei das primäre Auftriebselement und das variable Auftriebselement so ausgebildet sind, dass sie sich in der horizontalen Schlepp-Position teilweise über der Wasserlinie befinden, und wobei optional eines oder mehrere der Trägerbeine so ausgebildet sind, dass sie sich teilweise über der Wasserlinie befinden, wenn sich die Turbine in der horizontalen Schlepp-Position befindet.

5. Turbine nach einem der Ansprüche 1 bis 4, wobei der Ballast und das primäre Auftriebselement durch mindestens ein Trägerbein verbunden sind, wobei optional das mindestens eine Trägerbein ein frei flutendes Trägerbein ist.

6. Turbine nach Anspruch 5, wobei das mindestens eine Trägerbein so ausgebildet ist, dass esG untergetaucht ist, wenn sich die Turbine in der horizontalen Schlepp-Position befindet.

7. Windturbine nach einem der Ansprüche 1 bis 6, wobei sich der Ballast entlang oder unterhalb der Längsachse des Turms befindet.

8. Windturbine nach einem der Ansprüche 1 bis 7, wobei sich die Turbinenschaufeln in der horizontalen Schlepp-Position an der Vorderseite des Turms befinden und sich das variable Auftriebselement vor dem Ballast befindet.

9. Turbine nach einem der Ansprüche 1 bis 8, wobei der Ballast und das variable Auftriebselement aneinander befestigt sind.

10. Turbine nach einem der Ansprüche 1 bis 9, wobei entweder das primäre Auftriebselement oder das variable Auftriebselement oder beide jeweilige Tanks umfassen, wobei optional sowohl der primäre Auftriebstank als auch der variable Auftriebstank sich unterhalb der Wasserlinie befinden, wenn sich die Turbine in der aufrechten Stromerzeugungs-Position befindet.

11. Verfahren zum Aufstellen einer Spar-Windturbine nach einem der Ansprüche 1 bis 9, umfassend:
Zusammenbauen der Windturbine in einer horizontalen oder nahezu horizontalen Ausrichtung vor dem Aufstellen an einem Aufstellort, wobei das Zusammenbauen das Anbringen eines Turms der Turbine an einem tauchfähigen Sockel umfasst;
Schleppen der zusammengebauten Windturbine in einer horizontalen oder nahezu horizontalen Position zum Aufstellort; und
Aufrichten der zusammengebauten Windturbine am Aufstellort.

12. Verfahren nach Anspruch 11, wobei das Zusammenbauen der Windturbine in einer horizontalen oder nahezu horizontalen Ausrichtung die Schritte umfasst, den Turm der Turbine an dem tauchfähigen Sockel zu befestigen und einen Turbinengenerator, der eine Mehrzahl von Turbinenschaufeln umfasst, an einem freien Ende des Turms der Windturbine zu befestigen.

13. Verfahren nach Anspruch 11 oder Anspruch 12, wobei die montierte Windturbine unter ihrem eigenen Auftrieb in einer horizontalen oder nahezu horizontalen Position zum Aufstellort geschleppt wird, und wobei optional die montierte Windturbine mit einem temporären Auftriebselement versehen und dann in einer horizontalen oder nahezu horizontalen Position zum Aufstellort geschleppt wird.

14. Verfahren nach einem der Ansprüche 11 bis 13, wobei das Aufrichten der montierten Turbine das Fluten des Sockels der Windturbine umfasst, um deren Untertauchen zu bewirken.

15. Verfahren nach einem der Ansprüche 11 bis 14, wobei die aufgerichtete Windturbine wieder in die horizontale oder nahezu horizontale Schlepp-Position ausgerichtet wird, und wobei optional die Neuausrichtung aus einer aufgerichteten Position in die horizontale oder nahezu horizontale Schlepp-Position den Schritt des Entleerens des Sockels der Windturbine umfasst.

## Revendications

1. Une turbine (10) d'éolienne à mât en mer, comprenant :
une base (12) configurée pour être submergée, lorsque la turbine est dans une position dressée de production dans les eaux libres ; la base comprenant
un élément (22) de flottabilité primaire, dans lequel l'élément de flottabilité primaire comprend une chambre (23) ayant une flottabilité fixe ;
un ballast (24) ;
un élément (26) de flottabilité variable configuré pour être inondé sélectivement d'eau, afin d'ajouter au poids du ballast, et être évacué sélectivement pour donner de la flottabilité ;
au moins une jambe (32) en treillis, qui s'étend entre et est fixée à l'élément de flottabilité primaire et à l'élément de flottabilité variable, dans laquelle la au moins une jambe en treillis comprend une flottabilité variable ;
une tour (16) montée sur une surface extérieure de la chambre, la tour ayant un axe longitudinal ; et
un générateur (14) à turbine monté à une extrémité libre de la tour, le générateur à turbine comprenant un générateur (14g) et des aubes (14b) de turbine,
dans laquelle la tour et la base sont mobiles entre une position horizontale de remorquage, dans laquelle la turbine peut être remorquée dans une pièce d'eau, et une position dressée de production, dans laquelle la turbine est orientée verticalement pour être utilisée dans la pièce d'eau, et dans laquelle l'élément de flottabilité variable est configuré pour avoir une flottabilité, qui est variable sélectivement pour soulever ou abaisser le ballast dans la pièce d'eau afin de déplacer la turbine entre la position horizontale de remorquage, dans laquelle le générateur de la turbine est maintenu au-dessus de la surface de l'eau, et la position verticale de production, dans laquelle la chambre est submergée en dessous de la surface de l'eau.

2. La turbine de la revendication 1, dans laquelle l'élément de flottabilité variable et le ballast sont séparés axialement de l'élément de flottabilité primaire par rapport à l'axe longitudinal, et dans laquelle l'élément de flottabilité primaire est proximal de la tour et le ballast est distal de la tour.

3. La turbine de l'une des revendications 1 ou 2, dans laquelle la base comprend un axe horizontal de flottaison, qui est parallèle à la ligne de flottaison, lorsque l'on est dans la position horizontale de remorquage,
dans laquelle l'axe de flottaison est décalé angulairement de l'axe longitudinal de la tour, de manière à ce que la tour s'étende au-dessus de la ligne de flottaison, lorsque la turbine est dans la position horizontale de remorquage.

4. La turbine de l'une quelconque des revendications 1 à 3, dans laquelle l'élément de flottabilité primaire et l'élément de flottabilité variable sont configurés pour être partiellement au-dessus d'une ligne de flottaison, lorsque l'on est dans la position horizontale de remorquage, et dans laquelle éventuellement une ou plusieurs des jambes en treillis sont configurées pour être partiellement au-dessus de la ligne de flottaison, lorsque la turbine est dans la position horizontale de remorquage.

5. La turbine de l'une quelconque des revendications 1 à 4, dans laquelle le ballast et l'élément de flottabilité primaire sont assemblés par au moins une jambe en treillis, dans laquelle, le cas échéant, la au moins une jambe en treillis est une jambe en treillis non inondée.

6. La turbine de la revendication 5, dans laquelle la au moins une jambe en treillis est configurée pour être submergée, lorsque la turbine est dans la position horizontale de remorquage.

7. La turbine d'éolienne de l'une quelconque des revendications 1 à 6, dans laquelle le ballast se trouve le long ou en dessous de l'axe longitudinal de la tour.

8. La turbine d'éolienne de l'une quelconque des revendications 1 à 7, dans laquelle les aubes de la turbine sont disposées à l'avant de la tour dans la position horizontale de remorquage, et la flottabilité variable est disposée avant le ballast.

9. La turbine de l'une quelconque des revendications 1 à 8, dans laquelle le ballast et l'élément de flottabilité variable sont fixés l'un à l'autre.

10. La turbine de l'une quelconque des revendications 1 à 9, dans laquelle l'un ou les deux de l'élément de flottabilité primaire et de l'élément de flottabilité variable comprennent des réservoirs respectifs, dans laquelle, le cas échéant, à la fois le réservoir de flottabilité primaire et le réservoir de flottabilité variable sont disposés en dessous de la ligne de flottaison, lorsque l'on est dans la position dressée de production.

11. Un procédé de déploiement d'une turbine d'éolienne à mât suivant l'une quelconque des revendications 1 à 9, comprenant :
assembler la turbine d'éolienne dans une orientation horizontale ou presque horizontale avant de la déployer à un emplacement de montage, dans lequel l'assemblage comprend monter une tour de turbine sur une base submersible ;
remorquer la turbine assemblée de l'éolienne dans une position horizontale ou presque horizontale jusqu'à l'emplacement de montage ; et
dresser la turbine assemblée de l'éolienne à l'emplacement de montage.

12. Le procédé de la revendication 11, dans lequel assembler la turbine de l'éolienne dans une orientation horizontale ou presque horizontale comprend les stades de monter la tour de la turbine sur la base submersible et de monter un générateur de turbine comprenant une pluralité d'aubes de turbine à une extrémité libre de la tour de la turbine.

13. Le procédé de la revendication 11 ou de la revendication 12, dans lequel la turbine assemblée de l'éolienne est remorquée dans une position horizontale ou presque horizontale à l'emplacement de montage par sa propre flottabilité, et dans lequel éventuellement la turbine assemblée de l'éolienne est montée avec un élément de flottabilité temporaire et ensuite remorquée dans une position horizontale ou presque horizontale à l'emplacement de montage.

14. Le procédé de l'une quelconque des revendications 11 à 13, dans lequel dresser la turbine assemblée comprend inonder la base de la turbine de l'éolienne pour en provoquer la submersion.

15. Le procédé de l'une quelconque des revendications 11 à 14, dans lequel la turbine dressée de l'éolienne est réorientée en la position horizontale ou presque horizontale de remorquage, et dans lequel éventuellement la réorientation de la position dressée à la position horizontale ou presque horizontale de remorquage comprend le stade de désinonder la base de la turbine de l'éolienne.
